# EUROPEAN PATENT APPLICATION

(11) **EP 3 722 373 A1**
(43) Date of publication of application: **14.10.2020**
(21) Application number: 20166901.7
(22) Date of filing: 30.03.2020
(51) Int. Cl.: C09C 1/30, C01B 33/18, C09D 7/62

(54) **WHITE PIGMENT COMPOSITIONS AND RELATED METHODS**

(30) Priority: 09.04.2019 US 201916378774
(71) Applicant: Xerox Corporation, Webster, NY 14580 (US)
(72) Inventor: RESETCO, Cristina, Toronto, Ontario M4W3G9 (CA)
(74) Representative: Gill Jennings & Every LLP

(57) **Abstract**

White pigment compositions are provided. In embodiments, a white pigment composition comprises water and core-shell particles, each core-shell particle comprising a core and a shell over the core, wherein one of the core and the shell comprises a polymer and the other of the core and shell comprises silica. The polymer comprises an aromatic group, a hydroxyl-reactive functional group, and a polar group; and the silica comprises a hydroxyl group. The core and the shell are attached via covalent bonds formed between hydroxyl-reactive functional groups of the polymer and hydroxyl groups of the silica. Methods of making and using the white pigment compositions are also provided.

## Description

### BACKGROUND

The main white pigment used worldwide is titanium dioxide. Titanium dioxide has a high refractive index and high opacity. However, the extraction and manufacturing processes associated with titanium dioxide are energy intensive and have a significant impact on the environment. In addition, titanium dioxide can be difficult to utilize in some products, such as inkjet inks, due to the large size and high density of the particles. Dispersion and stability are also problems with titanium dioxide-based products. Alternative products include hollow polymer particles, such as Ropaque. However, these particles are mechanically fragile and are not effective under high humidity.

### SUMMARY

Provided are white pigment compositions and methods of making and using the compositions.

In one aspect, white pigment compositions are provided. In embodiments, a white pigment composition comprises water and core-shell particles, each core-shell particle comprising a core and a shell over the core, wherein one of the core and the shell comprises a polymer and the other of the core and shell comprises silica. The polymer comprises an aromatic group, a hydroxyl-reactive functional group, and a polar group; and the silica comprises a hydroxyl group. The core and the shell are attached via covalent bonds formed between hydroxyl-reactive functional groups of the polymer and hydroxyl groups of the silica.

In other embodiments, a white pigment composition comprises water and core-shell particles, each core-shell particle comprising a core and a shell over the core, wherein one of the core and the shell comprises a polymer and the other of the core and shell comprises silica. The polymer has a refractive index n of at least 1.5 and comprises an aromatic group selected from phenyl, xylene, naphthalene, and combinations thereof; a carboxylic anhydride group; and a carboxylic acid group. The silica comprises a hydroxyl group. The core and the shell are attached via covalent bonds formed between carboxylic anhydride groups of the polymer and hydroxyl groups of the silica. The core-shell particles have an average size in a range of from 300 nm to 400 nm and a polydispersity index in a range of from 0.02 to 0.25.

In another aspect, methods of making white pigment compositions are provided. In embodiments, such a method comprises mixing core particles with a shell precursor at room temperature, under ambient atmosphere, and for a period of time to induce reactions between hydroxyl-reactive functional groups and hydroxyl groups to form a covalently bound shell over each core particle. The core particles are polymer core particles comprising a polymer comprising an aromatic group, the hydroxyl-reactive functional groups, and a polar group, and the shell precursor is a silica precursor; or the core particles are silica core particles comprising silica and the hydroxyl groups and the shell precursor is a polymer precursor.

### DETAILED DESCRIPTION

Provided are white pigment compositions and methods of making and using the compositions. The white pigment compositions comprise core-shell particles having a polymer component and a silica component. Although the opacifying properties of the individual components are limited or non-existent, the present core-shell particles exhibit excellent opacifying properties. In embodiments, the core-shell particles, when deposited on a surface of a substrate, make a black substrate appear white, even at relatively low surface coverages (e.g., 3 mg/cm²). The white pigment compositions may be in the form of an aqueous dispersion and may be free from dyes, other opacifying agents, other pigments, surfactants, emulsifiers, and/or stabilizers. In embodiments, the white pigment compositions are useable as inks for inkjet printing applications. The methods of making the white pigment compositions are based on simple mixing of aqueous or polar organic solvent dispersions under ambient conditions. This is by contrast to methods based on more complex, expensive and energy intensive *in situ* polymerization.

In one aspect, white pigment compositions are provided. In embodiments, a white pigment composition comprises core-shell particles, each core-shell particle comprising a core and a shell over the core, wherein one of the core and the shell comprises a polymer and the other of the core and shell comprises silica. The core and the shell may be attached to one another via covalent bonds formed between hydroxyl-reactive functional groups present in the polymer and hydroxyl groups present in the silica. This covalently binding is direct covalent binding which means no separate linking molecules/groups are used to attach the polymer and the silica. Although the reaction between polymer hydroxy-reactive functional groups and silica hydroxyl groups provides corresponding covalent linkages, it is not necessary that every hydroxyl-reactive functional group react with every hydroxyl group. Thus, some unreacted hydroxy-reactive functional groups and some unreactive hydroxyl groups may be present in the core-shell particle. In addition, the core and shell components can be associated together by non-covalent intermolecular interactions, such as electrostatic and Van der Waals forces. Thus, covalent bonds between the core and the shell are not necessary in all embodiments.

The polymer of the core-shell particle may be a copolymer comprising at least two different types of monomers, e.g., 2 types of monomers, 3 types of monomers, 4 types of monomers, or more. The copolymer may be a random or an alternating copolymer. In embodiments, the copolymer is not a block copolymer.

The polymer may comprise an aromatic monomer, i.e., a monomer comprising at least one aromatic group. Aromatic groups/monomers help increase the refractive index (n) of the polymer. Illustrative aromatic groups include, e.g., phenyl, xylene, naphthalene. Illustrative aromatic monomers include styrene, methylstyrene, 4-methoxystyrene, p-xylene, and 2-vinylnaphthalene.

The polymer may comprise a hydroxyl-reactive monomer, i.e., a monomer comprising at least one functional group capable of reacting with the hydroxyl groups of silica. An illustrative hydroxyl-reactive functional group is a carboxylic anhydride. An illustrative hydroxyl-reactive monomer is maleic anhydride. Maleic anhydride can react with hydroxyl groups by nucleophilic addition and ring-opening of the carboxylic anhydride group to form an ester bond. The ring-opening reaction of a carboxylic anhydride group can also provide a pendant carboxylic acid group, a polar group which is useful for increasing the compatibility and thus, stability of the polymer in water and aqueous solutions.

The polymer may comprise other monomers, such as a polar monomer, i.e., a monomer comprising at least one polar group. An illustrative polar group is carboxylic acid. Illustrative polar monomers include maleic acid and (meth)acrylic acid. As noted above, polar monomers/groups are useful for increasing the compatibility and stability of the polymer in water/aqueous solutions. As also noted above, a hydroxyl-reactive monomer such as maleic anhydride can provide both a functional group which reacts with hydroxyl groups as well as a polar group, i.e., a carboxylic acid group. However, the polymer may comprise both maleic anhydride monomers (at least some of which react with hydroxyl groups of silica to provide covalent linkages and pendant carboxylic acid groups) and maleic acid monomers (to provide additional carboxylic acid groups). It is also noted that maleic acid monomers in the polymer may originate from maleic anhydride monomers of a polymer precursor which have undergone hydrolysis under basic pH. Such polymer precursors may be used in the formation of polymer core particles as further described below.

Another monomer which may be included in the polymer is, e.g., isooctyl ester. Such additional monomers may be included to tune the properties of the polymer, e.g., its polarity, refractive index, glass transition temperature, solubility and compatibility with other components in the white pigment compositions.

The polymer of the core-shell particle may be characterized by its refractive index (*n*). In embodiments, the polymer has an *n* of 1.5 or greater. This includes an *n* of at least 1.55, 1.58, 1.60, 1.62, 1.64, 1.66, or 1.70. The n value may refer to the refractive index measured by an Abbe refractometer using a wavelength of about 590 nm. The relative amounts of the different types of monomers in the polymer may be adjusted to provide a desired *n* and/or a desired stability in water.

The polymer of the core-shell particle may be characterized by its number average molecular weight. In embodiments, the polymer has a number average molecular weight in the range of from 1,000 to 200,000. This includes polymers having a number average molecular weight in the range of from 1,000 to 100,000 or from 1,000 to 10,000.

The silica of the core-shell particle refers to a solid material of SiO₂ having Si-O-Si linkages within the solid material. As noted above, although the silica may be covalently bound to the polymer via the reaction of polymer hydroxyl-reactive functional groups and silica hydroxyl groups, the silica of the core-shell particle may include at least some unreacted hydroxyl groups.

The core-shell particles may be characterized by a diameter. The diameter may be an average value as measured from a representative number of core-shell particles. In embodiments, the diameter is in a range of from 300 nm to 740 nm. This includes a diameter in a range of from 300 nm to 500 nm, from 300 nm to 400 nm, or from 350 nm to 450 nm. These diameters are generally larger than would be used to achieve particles having anti-reflective properties. Diameters of less than 200 nm are generally too small to be used in the present white pigment compositions. The diameter may be measured using a nanoparticle size analyzer such as a Zetasizer DLS system.

The core-shell particles may be characterized by a polydispersity index (PDI), which is a measure of the distribution of sizes of the core-shell particles. In embodiments, the PDI is in a range of from 0.02 to 0.25. This includes a PDI of from 0.02 to 0.20, from 0.02 to 0.15, and from 0.02 to 0.10. The PDI may be measured using a nanoparticle size analyzer such as a Zetasizer DLS system.

In embodiments, the core-shell particles may consist essentially of, or consist of, the polymer and silica components described above. The core-shell particles may be free of one or more of the following: dyes, other pigments/opacifying agents (e.g., TiO₂), surfactants, emulsifiers, and stabilizers.

The white pigment composition may include other components besides the core-shell particles. In embodiments, the white pigment composition includes water, thereby providing the composition in the form of an aqueous dispersion. In this disclosure, "dispersion" means that individual particles of the dispersion (e.g., core-shell particles) are homogeneously distributed throughout a liquid medium. Other components such as pH adjusters (e.g., triethanolamine) and/or biocides may be included in the white pigment compositions. In embodiments, the white pigment composition does not include, i.e., is free of, the excluded components above such as dyes, other pigments/opacifying agents (e.g., TiO₂), surfactants, emulsifiers, and stabilizers.

The white pigment compositions may be combined with other compositions in order to provide an opacifying effect to such other compositions. By way of illustration, the other composition may be a film-forming composition (configured to form a film on a surface of substrate), an adhesive composition (configured to form an adhesive layer on a surface of substrate or between two surfaces), a toner composition (comprising toner particles and configured to be used in a xerographic printing system), an aqueous inkjet ink composition (comprising water and configured to be jettable via an inkjet printing system), etc. In embodiments, when combined with other compositions, e.g., a toner composition or an aqueous inkjet ink composition, the resulting composition does not include, i.e., is free of, dyes and other pigments/opacifying agents (e.g., TiO₂).

The white pigment compositions may be characterized by its opacifying properties. The opacifying properties may refer to the lightness value (L*) of a substrate treated with the white pigment composition. By treated, it is meant that the core-shell particles of the white pigment composition have been deposited onto a surface of the substrate. The opacifying properties may also refer to the optical density value (V) of a substrate treated with the white pigment composition. L* and V may be experimentally determined using a spectrodensitometer, e.g., an X-Rite spectrodensitometer. A high L* value indicates a light/white substrate and a low L* value indicates a dark/black substrate. An L* value of 100 refers to the lightest white while an L* value of 0 refers to the darkest black. A low V value indicates a light/white substrate and a high V value indicates a dark/black substrate.

The white pigment compositions are capable of increasing the L* value of substrates treated with the compositions as compared to the untreated substrates. Similarly, the white pigment compositions are capable of decreasing the V value of substrates treated with the compositions as compared to the untreated substrates. In embodiments, the white pigment compositions increase the L* value of a substrate treated with the compositions by a factor of 2, 3, or 4. In embodiments, the treated substrate has an L* value of at least 70, at least 80, or at least 90. In embodiments, the white pigment compositions reduce the V value of a substrate treated with the compositions by a factor of 3, 5, 9, or 10. In embodiments, the treated substrate has an V value of no more than 0.15, no more than 0.20, no more than 0.30, or no more than 0.50. These values may be achieved using a surface coverage of the core-shell particles of the white pigment composition of no more than 10 mg/cm², no more than 5 mg/cm², or no more than 2 mg/cm².

Methods of making the white pigment compositions are also provided. In embodiments, such a method comprises combining core particles with a shell precursor under conditions to form the hybrid core-shell particles. These conditions may induce a reaction between hydroxyl-reactive functional groups (provided by the core particles or the shell precursor) and hydroxyl groups (provided by the other of the core particles/shell precursor) to form a covalently bound shell over each core particle. The core particles may be provided as a dispersion, i.e., an aqueous dispersion comprising water and the core particles or an organic dispersion comprising an organic liquid medium and the core particles. Similarly, the shell precursor may be provided as an aqueous dispersion comprising water and the shell precursor or an organic dispersion comprising an organic liquid medium and the core particles. An illustrative organic liquid medium is a polar solvent such as acetone. The aqueous dispersions may comprise other liquid media besides water, e.g., acetone.

The conditions under which the core-shell particles are produced refer to the temperature, time, presence of additives in the dispersions (or which are added to the combined dispersion), use of active mixing, and the atmosphere under which the dispersions are combined. However, in embodiments, the temperature is room temperature (i.e., 20 to 25 °C) and the atmosphere is an ambient atmosphere. In embodiments, the combined dispersion is actively mixed (e.g., sonication, stirring, etc.). In embodiments, additives are included in the dispersions or added to the combined dispersion. Additive(s) may be a component(s) to facilitate formation of the shell and/or induce core-shell coupling reactions. In embodiments, the additive(s) is a short chain alcohol (e.g., methanol, ethanol, 1-propanol), a catalyst (e.g., 4-dimethylaminopyridine) and/or a pH adjuster (e.g., a base such as ammonia). The relative amounts of the core particles/shell precursor and conditions may be adjusted to provide core-shell particles having a desired overall size, shell thickness, and PDI.

If the shell is to be composed of the polymer, the shell precursor may be referred to as a polymer precursor. Illustrative polymer precursors may comprise any of the monomers described above and may be in the form of copolymers as described above. The polymer precursors may be characterized by the refractive indices and molecular weights described above. Illustrative polymer precursors include poly(styrene-co-maleic anhydride); poly(styrene-co-maleic anhydride), partial isooctyl ester; poly(styrene-alt-maleic anhydride).

By way of illustration (and further described in the Example, below), poly(styrene-co-maleic anhydride), partial isooctyl ester (shell polymer precursor) in acetone may be combined with a dispersion of silica core particles in acetone in the presence of 4-dimethylaminopyridine and actively mixed in ambient atmosphere, at room temperature, and for a period of time (e.g., 10 hours, 24 hours, 48 hours). These conditions can induce at least some reactions between the maleic anhydride groups of the polymer precursor with the hydroxyl groups of the silica to covalently bind the shell to the core. This can also provide pendant carboxylic acid groups useful for facilitating dispersion of the core-shell particles in aqueous media without requiring any surfactants, emulsifiers, or stabilizers. The formed core-shell particle has a core composed of silica (some unreacted hydroxyl groups may remain) and a shell composed of a copolymer of styrene, maleic anhydride (as some unreacted maleic anhydride monomers may remain), and isooctyl ester. The copolymer and the silica are covalently bound to one another via at least some covalent bonds formed between maleic anhydride of the copolymer and the hydroxyl groups of silica. The copolymer further comprises at least some pendant carboxylic acid groups resulting from the ring-opening coupling reaction.

If the shell is to be composed of silica, the shell precursor is a silica precursor. Illustrative silica precursors include tetraalkyl orthosilicates such as tetramethyl orthosilicate, tetraethyl orthosilicate, and tetrapropyl orthosilicate. Hydrolysis and condensation of such silica precursors in the presence of an alcohol and ammonia provides the solid silica. Other illustrative silica precursors include (3-chloropropyl)triethoxysilane, (3-aminopropyl)triethoxysilane, and (3-aminopropyl)trimethoxysilane. Still other illustrative silica precursors include alkylethoxysilanes, such as methyltriethoxysilane, dimethyldiethoxysilane, and dimethoxydiphenylsilane.

By way of illustration (and further described in the Example, below), tetraethyl orthosilicate in water, 1-propanol, and ammonia may be combined with an aqueous dispersion of polymer core particles, the core particles comprising a copolymer comprising styrene, maleic anhydride, maleic acid, and isooctyl ester. The combined dispersion may be actively mixed in ambient atmosphere, at room temperature, and for a period of time (e.g., 10 hours, 24 hours, 48 hours). The formed core-shell particle has a core composed of a copolymer of styrene, maleic anhydride (as some unreacted maleic anhydride monomers may remain), maleic acid, and isooctyl ester and a shell composed of silica. In embodiments, the silica shell comprises at least some unreacted hydroxyl groups. In such embodiments, at least some other hydroxyl groups of the silica shell have reacted with at least some maleic anhydride monomers of the copolymer core to form covalent linkages as described above.

As noted above, in some embodiments, the core particles used to form the core-shell particles are polymer core particles. Polymer core particles may be formed from the polymer precursors described above. In embodiments, e.g., for polymer precursors comprising maleic anhydride monomers, the polymer precursors may be dissolved in an organic liquid medium (e.g., acetone) in the presence of a base (e.g., ammonia) at an elevated temperature (e.g., 40, 50, or 60 °C) for a time (e.g., 10, 30, 50 min). This process converts at least some of the maleic anhydride groups to maleic acid, thereby facilitating dispersion into aqueous liquid media. The modified polymer precursor may then be added to water to form an aqueous dispersion of polymer core particles.

In other embodiments, the core particles used to form the core-shell particles are silica core particles. Silica core particles may be formed from the silica precursors described above. In embodiments, e.g., for tetraalkyl orthosilicate silica precursors, the tetraalkyl orthosilicate may be converted to silica using a process similar to that described above for forming the silica shell. That is, the tetraalkyl orthosilicate may be mixed with water, 1-propanol, and ammonia at a temperature (e.g., room temperature) and for a time (e.g., 10 hours, 24 hours, 48 hours) to form the silica core particles. The silica core particles may be separated from the aqueous liquid medium and dried. The dried silica core particles may be redispersed in an organic liquid medium.

After formation of the core-shell particles as described above, the resulting core-shell dispersions may be used as is or they may be separated from the liquid media and dried. The core-shell dispersions or the dried core-shell particles may be combined with various other compositions as described above, e.g., film-forming compositions having any of the opacifying properties described above.

Methods of using the white pigment compositions are also provided. In embodiments, such a method comprises depositing the white pigment composition onto a surface of a substrate. In embodiments, the deposition is inkjet printing. To facilitate the formation of a layer or film from the white pigment composition, the composition may be combined with a film-forming composition (or components added so that the white pigment composition is also a film-forming composition). The substrate may be characterized by an L* and/or an V value prior to the deposition. The L* value (V value) of the treated substrate may increase (decrease) as described above. The L* value (V value) of the treated substrate may have any of the values described above. These values may be achieved at any of the surface coverages described above.

### EXAMPLE

The following Example is being submitted to illustrate various embodiments of the present disclosure. The Example is intended to be illustrative only and is not intended to limit the scope of the present disclosure.

### Example 1. Polystyrene-silica core-shell particles

**Preparation of polymer particle dispersion from poly(styrene-co-maleic anhydride), partial isooctyl ester.** 28 g of poly(styrene-co-maleic anhydride), partial isooctyl ester polymer was dissolved in 400 mL acetone and heated to 50 °C. 3.5 g NH₄OH (29% aqueous solution) was dissolved in 70 mL of acetone, then added dropwise to the polymer solution and stirred for 30 minutes. The polymer solution was added dropwise to 210 mL of water (at 60 °C) with mechanical stirring. This dispersion was concentrated to 30% solids by evaporating excess solvents.

**Deposition of silica on polymer particles.** An aqueous solution was prepared by combining 30 mL of 1-propanol, 10 mL of water and 2.0 g NH₄OH (29%) under vigorous stirring at room temperature. 1.0 g of tetraethyl orthosilicate was added to the aqueous solution and stirred for 30 minutes. 2.0 g of 30 wt.% of polymer particle dispersion was added dropwise and stirred for 24 hours at room temperature.

Final core-shell particle size was 302 nm and the polydispersity index (PDI) was 0.02 measured as in water by Zetasizer DLS system.

### Example 2. Silica-polystyrene core-shell particles

**Preparation of silica nanoparticles (core).** An aqueous solution was prepared by mixing 25 mL of 1-propanol, 10 mL of water, 2.0 g NH₄OH (29% aqueous solution) at 1000 RPM at room temperature. Then, 1.0 g of tetraethyl orthosilicate was added to the aqueous solution and stirred for 24 hours at room temperature. The nanoparticles were isolated by centrifugation at 10,000 RPM for 20 minutes and dried in vacuum to obtain a white powder. The product yield was 0.29 g.

**Deposition of poly(styrene-co-maleic anhydride) on silica nanoparticles.** Poly(styrene-co-maleic anhydride), average Mn ∼1,900 with 75 wt. % styrene, was added to the silica nanoparticles at 20 wt.%. Specifically, 240 mg of silica nanoparticles were dispersed in 5 mL acetone and a solution of 50 mg of poly(styrene-co-maleic anhydride) in 5 mL acetone was added dropwise under vigorous stirring at room temperature. 4-dimethylaminopyridine, 1 mg was added as catalyst. The resulting solution was sonicated for 30 minutes and resulted in a white dispersion. The dispersion was stirred for 24 hours. The particles were isolated by centrifuging at 10,000 RPM to obtain a white powder that can be redispersed in water. The final particle size was 376 nm and the PDI was 0.10 with a single particle distribution, confirming that the particles were very well dispersed without any aggregates. These measurements were taken in water using a Zetasizer DLS system.

The hybrid core-shell particles were deposited on substrates by dispersing 50 mg of particle powder in 1.5 mL of water using sonication and adding 10 wt.% (by solid weight) of the polymer dispersion (a film-forming composition) from Example 1 in order to form films.

In order to evaluate the optical appearance and properties of the hybrid core-shell particles, optical measurements were conducted using X-Rite spectrodensitometer. Different substrates/materials were compared, including white paper (Xerox® Digital Color Elite Gloss), black paper, and black paper treated with the hybrid core-shell particles on top. The objective was to investigate the opacity and hiding power of the hybrid core-shell particles on top of a black substrate and compare with a white substrate.

**Table 1. Optical properties of hybrid core-shell PS-Si and Si-PS particles compared to white and black paper.**

| **Measurement** | **Black paper** | **White paper** | **Example 1. PS-Si on black paper** | **Example 2. Si-PS on black paper** |
|---|---|---|---|---|
| L* color space | **21.63 ± 0.19** | **86.34 ± 0.75** | **86.81 ± 0.73** | **86.12 ± 0.67** |
| a* color space | 0.44 ± 0.02 | 1.08 ± 0.01 | -0.80 ± 0.03 | -4.41 ± 0.5 |
| b* color space | -1.8 ± 0.03 | -4.64 ± 0.11 | -3.36 ± 0.25 | -8.10 ± 0.42 |
| V optical density | **1.46 ± 0.02** | **0.16 ± 0.01** | **0.16 ± 0.01** | **0.18 ± 0.01** |
| C optical density | 1.48 ± 0.02 | 0.17 ± 0.01 | 0.16 ± 0.01 | 0.21 ± 0.01 |
| M optical density | 1.46 ± 0.02 | 0.16 ± 0.01 | 0.15 ± 0.01 | 0.15 ± 0.01 |
| Y optical density | 1.42 ± 0.01 | 0.14 ± 0.01 | 0.13 ± 0.01 | 0.11 ± 0.01 |

The CIELAB color space was used to compare the visible color and appearance of samples. The L* value is used to describe lightness, where L*=0 is the darkest black and L*=100 is the brightest white. The results indicate that black paper has a low L* value of 21.63, as expected for a dark material. When the black paper is covered with hybrid core-shell particles, however, the L* value increases dramatically to L*=86.81 (Example 1) and L*=86.12 (Example 2). The hybrid core-shell particles on top of black paper make the treated substrate appear the same as the white paper, L*=86.34. Therefore, the hybrid core-shell particles have excellent opacity and hiding power that can be used to make materials appear white even if the untreated material is originally black.

The optical density measurements also confirm that the treated black paper has optical properties similar to white paper. The dominant optical density for black paper is high, V=1.46. When the black paper is treated with the hybrid core-shell particles, the optical density decreases significantly to match the optical density of white paper. Specifically, V=0.16 (Example 1), V=0.18 (Example 2), which is the same as white paper, V=0.16.

Examples 1 and 2 were prepared using a coverage of 3 mg/cm² of particles on the substrate, which illustrates the effectiveness of the core-shell particles in achieving opacity or hiding power.

It will be appreciated that variants of the above-disclosed and other features and functions or alternatives thereof, may be combined into many other different systems or applications. Various presently unforeseen or unanticipated alternatives, modifications, variations or improvements therein may be subsequently made by those skilled in the art, which are also intended to be encompassed by the following claims.

## Claims

1. A white pigment composition comprising water and core-shell particles, each core-shell particle comprising a core and a shell over the core, wherein one of the core and the shell comprises a polymer and the other of the core and shell comprises silica,
wherein the polymer comprises an aromatic group, a hydroxyl-reactive functional group, and a polar group; and the silica comprises a hydroxyl group, and
wherein the core and the shell are attached via covalent bonds formed between hydroxyl-reactive functional groups of the polymer and hydroxyl groups of the silica.

2. The composition of claim 1, wherein the polymer has a refractive index n of at least 1.5.

3. The composition of claim 2, wherein the core-shell particles have an average size in a range of from 300 nm to 400 nm and a polydispersity index in a range of from 0.02 to 0.25.

4. The composition of claim 1, wherein the aromatic group is selected from phenyl, xylene, naphthalene, and combinations thereof; the hydroxyl-reactive functional group is a carboxylic anhydride; and the polar group is a carboxylic acid.

5. The composition of claim 1, wherein the polymer is a copolymer comprising styrene, methylstyrene, 4-methoxystyrene, p-xylene, 2-vinylnaphthalene, or combinations thereof; maleic anhydride; and optionally, maleic acid, (meth)acrylic acid, or both.

6. The composition of claim 1, wherein the polymer is a copolymer comprising styrene and maleic anhydride.

7. The composition of claim 6, wherein the copolymer further comprises maleic acid, (meth)acrylic acid, or both.

8. The composition of claim 1, wherein the core-shell particles and the composition are free of dyes, pigments, opacifying agents, surfactants, emulsifiers, and stabilizers.

9. The composition of claim 1, wherein the composition consists essentially of the water, the core-shell particles, optionally, at least one pH adjuster and optionally, at least one biocide.

10. The composition of claim 1, wherein the core comprises the polymer and the shell comprises the silica.

11. The composition of claim 1, wherein the core comprises the silica and the shell comprises the polymer.

12. The composition of claim 1, wherein a surface coverage of no more than 3 mg/cm² of the core-shell particles on a surface of a substrate increases a L* value of the substrate by a factor of at least 3 as compared to the substrate, untreated.

13. A white pigment composition comprising water and core-shell particles, each core-shell particle comprising a core and a shell over the core, wherein one of the core and the shell comprises a polymer and the other of the core and shell comprises silica,
wherein the polymer has a refractive index n of at least 1.5 and comprises an aromatic group selected from phenyl, xylene, naphthalene, and combinations thereof; a carboxylic anhydride group; and a carboxylic acid group; and the silica comprises a hydroxyl group,
wherein the core and the shell are attached via covalent bonds formed between carboxylic anhydride groups of the polymer and hydroxyl groups of the silica, and
wherein the core-shell particles have an average size in a range of from 300 nm to 400 nm and a polydispersity index in a range of from 0.02 to 0.25.

14. The composition of claim 13, wherein the polymer is a copolymer comprising styrene, methylstyrene, 4-methoxystyrene, p-xylene, 2-vinylnaphthalene, or combinations thereof; maleic anhydride; and optionally, maleic acid, (meth)acrylic acid, or both.

15. A method of using the white pigment composition of claim 1, the method comprising depositing the composition on a surface of a substrate.

16. The method of claim 15, wherein the deposition is carried out using an inkjet printing system.

17. A method of making a white pigment composition, the method comprising:
mixing core particles with a shell precursor at room temperature, under ambient atmosphere, and for a period of time to induce reactions between hydroxyl-reactive functional groups and hydroxyl groups to form a covalently bound shell over each core particle,
wherein the core particles are polymer core particles comprising a polymer comprising an aromatic group, the hydroxyl-reactive functional groups, and a polar group, and the shell precursor is a silica precursor; or the core particles are silica core particles comprising silica and the hydroxyl groups and the shell precursor is a polymer precursor.

18. The method of claim 17, wherein the core particles are the polymer core particles provided as an aqueous dispersion; and the shell precursor is the silica precursor and the silica precursor is a tetraalkyl orthosilicate.

19. The method of claim 18, further comprising forming the polymer core particles from the polymer precursor.

20. The method of claim 17, wherein the core particles are the silica core particles provided as an organic dispersion comprising a polar solvent; and the shell precursor is the polymer precursor.
